# FASCICULE DE BREVET EUROPEEN

(11) **EP 2 448 866 B1**
(45) Date de publication et mention de la délivrance du brevet: **10.08.2016**
(21) Numéro de dépôt: 10745316.9
(22) Date de dépôt: 24.06.2010
(51) Int. Cl.: C01F 11/18, C09K 5/10, F24J 2/46

(54) **FLUIDE CALOPORTEUR**
KÜHLMITTEL
COOLANT

(30) Priorité: 30.06.2009 FR 0954464
(43) Date de publication de la demande: 09.05.2012
(73) Titulaire: Omya International AG, 4665 Oftringen (CH); Longuemard, Jean-Paul, -62223 Sainte Catherine (FR)
(72) Inventeur: LONGUEMARD, Jean-Paul, F-62223 Sainte Catherine (FR); GOTTELAND, Yves Didier, F-66170 Millas (FR); HUSSON, Maurice, F-51000 Chalons en Champagne (FR)
(74) Mandataire: Loyer & Abello
(86) Numéro de dépôt international: PCT/FR2010/051293
(87) Numéro de publication internationale: WO 2011/001072

(56) Documents cités:
- EP-A- 0 069 404
- DE-A1- 4 131 516
- FR-A- 2 202 272
- FR-A1- 2 297 904
- US-A- 4 083 490
- US-A1- 2005 269 548
- DMITRY V. VOLODKIN, ALEXANDER I. PETROV, MICHELLE PREVOT, GLEB B. SUKHORUKOV: "Matrix Polyelectrolyte Microcapsules: New System for Macromolecule Encapsulation" LANGMUIR, vol. 20, no. 8, 9 mars 2004 (2004-03-09), pages 3398-3406, XP002565118 Extrait de l'Internet: URL:http://pubs.acs.org/doi/abs/10.1021/la 036177z> [extrait le 2010-01-20]

## Description

### Domaine technique de l'invention

La présente invention se rapporte à un fluide spécifique, lieu de conversion énergétique également caloporteur, par la suite appelé « spécifique ».

### Etat de la technique

De nombreux fluides caloporteurs sont connus et utilisés dans diverses applications. L'air et l'eau sont couramment utilisés en raison de leur disponibilité naturelle. D'autres types de fluides caloporteurs connus sont les fluides organiques, les sels fondus et les métaux liquides.

Lors du choix d'un fluide caloporteur pour une application particulière, plusieurs critères doivent être pris en considération :
- Absorptivité du fluide.
- Domaine de température d'utilisation : Températures maximale et minimale.
- Tenue des performances dans le temps : Agressivité du fluide vis-à-vis des matériaux utilisés pour l'installation, risques de corrosion ou d'encrassement,...
- Règles de sécurité : Risques de brûlures, risques électriques, d'incendie, risques d'explosion, risques toxiques, risques liés aux équipements sous pression, règles de rejet et de recyclage du fluide.
- Critères technico-économiques : coûts d'investissement et d'exploitation.

Dans le cas d'un capteur solaire domestique, destiné à chauffer l'eau sanitaire d'une habitation, le fluide caloporteur généralement utilisé est un mélange d'eau et d'antigel. En effet, ce fluide répond de manière satisfaisante à tous les critères susmentionnés pour ce type d'application.

Cependant, ce fluide présente une absorptivité limitée et le capteur solaire doit donc être conçu pour favoriser la conversion de lumière en chaleur. Le rendement du capteur solaire est limité.

US4083490 décrit un collecteur destiné à absorber le rayonnement solaire comportant un milieu absorbant constitué d'éthylène glycol, d'eau et d'une suspension colloïdale de graphite ayant des particules d'environ 1 µm. La suspension colloïdale de graphite se comporte comme des corps noirs finement divisés qui absorbent directement une quantité importante d'énergie radiative.

Le document DE 4131516 divulgue un fluide de transport de chaleur chargé avec des particules d'aluminium ayant une conductivité thermique améliorée.

Le document US2005/269548 divulgue une composition de fluide pour un système de refroidissement automobile. La composition de fluide comprend un caloporteur et une pluralité de nanoparticules dispersées dans le caloporteur. La pluralité de nanoparticules comprend du verre, de l'oxyde de silicium, de la poudre de ponce, des composés métalliques conçus pour réagir avec du chlorure dans le caloporteur, et/ou leurs mélanges.

Le document FR2202272 décrit un agent d'échange thermique liquide comportant 1 à 6 % en volume d'une matière solide inerte ayant un diamètre moyen compris entre 10 et 150 µm. La matière solide inerte est du sable, du minerai pulvérulent et du laitier broyé.

Le document « Matrix polyelectrolyte Microcapsule : New system for Macromolecule Encapsulation » enseigne la réalisation d'une suspension de microparticules de CaCO3 dans une solution de polystyrène sulfonate de sodium ou d'hydrocarbure aromatique polycyclique, en tant que produit intermédiaire d'un procédé de fabrication de microcapsules de polyélectrolytes destinées à emprisonner des macromolécules.

Le document EP0069404 divulgue un fluide de transport de chaleur qui comporte une très petite quantité de carbonate de baryum, calcium ou strontium pour pouvoir dissoudre un résidu de CO₂ pouvant être libéré par une solution hydroxyde lors du remplissage d'un tube sous vide.

Le document US4083490 divulgue un collecteur destiné à absorber le rayonnement solaire qui comporte un milieu absorbant constitué d'éthylène glycol, d'eau et d'une suspension colloïdale de graphite.

Le document FR2297904 divulgue des compositions polymérisables destinés à former des corps capteurs d'énergie lumineuse. Les compositions polymérisables comportent une résine réticulable et une association de charges pulvérulentes noires absorbantes et des charges pulvérulentes blanches diffusantes.

### Résumé de l'invention

Un problème que la présente invention propose de résoudre est de fournir un fluide spécifique particulièrement adapté à une utilisation dans un capteur solaire domestique. En particulier, un but de l'invention est d'améliorer l'absorptivité du fluide spécifique.

La solution proposée par l'invention est un fluide spécifique conforme à l'objet de la revendication 1.

On a constaté que, grâce à ces caractéristiques, le fluide spécifique est lieu de conversion énergétique et présente donc une absorptivité élevée. Ce fluide, utilisé dans un capteur solaire, permet donc d'améliorer le rendement énergétique du capteur. De plus, le capteur solaire peut être conçu pour diriger la lumière vers le fluide, sans que d'autres mesures favorisant une conversion énergétique ne soient nécessaires.

De plus, les particules de la poudre minérale fortement diffusante présentent en moyenne un coefficient de diffusion de l'énergie lumineuse supérieur à 0,7-, de préférence supérieur à 0,9. Un tel coefficient de diffusion de l'énergie peut être mesuré à l'aide d'un réflectomètre, par exemple par une méthode de mesure par sphère intégrante. Dans une telle méthode, une particule placée au centre d'un capteur sensiblement sphérique reçoit un flux d'énergie lumineuse incident. Le capteur sensiblement sphérique mesure le flux d'énergie diffusé par la particule dans tout l'espace. Le coefficient de diffusion de l'énergie est défini comme le rapport entre le flux total diffusé et le flux incident. Le complément à 1 du coefficient de diffusion constitue le coefficient d'absorption de l'énergie de la particule.

La poudre minérale fortement diffusante comprend du carbonate de calcium.

De préférence, la poudre minérale fortement diffusante présente une granulométrie médiane comprise entre 1 et 3 µm.

De préférence, la poudre minérale fortement diffusante est essentiellement constituée de particules sphéroïdales. De telles formes favorisent la diffusion de la lumière.

De préférence, le fluide comprend de l'antigel, la concentration massique d'antigel étant comprise entre 0 % exclu et 40 % inclus.

Un fluide antigel est particulièrement souhaitable pour des applications susceptibles d'être exposées à des basses températures, par exemple dans des installations extérieures, selon le climat du lieu de l'installation. Par exemple, des fluides antigel à base d'éthylène glycol sont disponibles. Des antigels organiques sans glycol sont aussi disponibles, qui présentent l'avantage d'une absence de toxicité.

De préférence, le fluide présente une absorptivité de l'énergie comprise entre 0,1 et 10 cm⁻¹ pour le rayonnement solaire, de préférence de l'ordre de 1 cm⁻¹. Cet ordre de grandeur de l'absorptivité permet une absorption à peu près totale après une épaisseur d'environ 20 à 30 mm. Pour cela, un ou plusieurs colorants peuvent être ajoutés au fluide spécifique, par exemple un colorant liquide organique dans une concentration comprise entre 0,2% et 1%. Un produit antigel coloré peut également être employé dans ce but. L'absorptivité ne doit pas être trop forte pour permettre une conversion de chaleur dans la masse du fluide, et non une absorption superficielle limitée à une couche mince du fluide qui serait susceptible de produire un échauffement local excessif de la couche superficielle du fluide.

De préférence, le fluide comprend un tensioactif, la concentration massique de tensioactif étant comprise entre 0 % exclu et 3 % inclus.

De préférence, le fluide comprend un anti-moussant, la concentration massique d'anti-moussant étant comprise entre 0 % exclu et 3 % inclus.

Un produit anti-moussant permet notamment d'empêcher la formation de bulles susceptibles d'accroître la réflectivité surfacique du fluide, et donc de diminuer son absorption totale.

Selon un mode de réalisation, la concentration massique de poudre minérale est de 3 %, la concentration massique d'antigel est de 30 %, la concentration massique de tensioactif est comprise entre 0,2 et 0,3 % et la concentration massique d'anti-moussant est comprise entre 0,2 et 0,3 %.

De préférence, le fluide comprend en outre un produit bactéricide. Un produit bactéricide est particulièrement souhaitable pour des applications dans des installations devant rester à température ambiante pendant des durées significatives, par exemple pour des installations de chauffage solaire ne fonctionnant qu'une partie de l'année.

L'invention propose également l'utilisation d'un fluide spécifique dans un dispositif de conversion d'un rayonnement lumineux en chaleur, dans laquelle un rayon lumineux est dirigé vers ledit fluide spécifique, le fluide spécifique étant le lieu d'une conversion énergétique

L'invention propose également un dispositif de conversion d'un rayonnement lumineux en chaleur, comportant un fluide spécifique disposé de manière à pouvoir recevoir un rayonnement lumineux pour être le lieu d'une conversion énergétique. Avantageusement, ce dispositif comporte un capteur solaire.

Certains aspects de l'invention sont basés sur l'idée d'employer une charge de poudre fortement diffusante de la lumière en suspension dans un fluide de conversion énergétique, de manière à provoquer un phénomène de diffusion multiple de la lumière dans le fluide. Un tel phénomène est susceptible d'accroître sensiblement la distance de propagation effective de la lumière dans un volume de fluide donné et d'homogénéiser la distribution du flux lumineux dans le fluide. Ainsi, la diffusion du rayonnement lumineux par les particules de la poudre diffusante combinée à l'absorption du rayonnement se produisant essentiellement dans le liquide permet de produire une conversion énergétique et un échauffement du fluide dans des volumes substantiels. Cet échauffement en volume est particulièrement adapté à des applications dans lesquelles on souhaite chauffer un débit relativement élevé de liquide à une température relativement modérée. Certains aspects de l'invention sont basés sur l'idée d'employer une poudre diffusante dont la granulométrie est comparable aux longueurs d'onde des principales composantes du rayonnement solaire, afin de favoriser des phénomènes de résonances susceptibles d'améliorer la section efficace de diffusion des particules.

On rappelle que dans le rayonnement solaire, l'essentiel de l'énergie se trouve dans une plage spectrale allant d'environ 0,5 à environ 1, 6 µm, en particulier entre 0,5 et 0,7 µm.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif

### Description détaillée d'un mode de réalisation de l'invention

Dans un mode de réalisation, l'invention propose un fluide spécifique qui convient, notamment, pour une utilisation dans un capteur solaire domestique. Ce fluide spécifique comprend :
- de l'eau,
- de la poudre de carbonate de calcium,
- éventuellement, un antigel, et/ou un colorant,
- éventuellement, un bactéricide
- éventuellement, un tensio-actif, et
- éventuellement, un anti-moussant.

Ci-dessous, tous les pourcentages indiqués sont des pourcentages massiques.

La concentration de poudre de carbonate de calcium et sa granulométrie médiane sont déterminées en tenant compte d'une part de l'absorptivité du fluide spécifique et d'autre part de la capacité de la poudre à être mise en suspension dans le fluide spécifique. Des essais réalisés par les inventeurs ont montré que l'absorptivité du fluide spécifique, et donc le rendement du capteur solaire, augmente avec la concentration de poudre, puis atteint 98 % ou plus. Ceci est dû au fait que, grâce aux caractéristiques de l'invention, le fluide spécifique est un lieu de conversion énergétique.

Ces essais ont également montré que la granulométrie médiane de la poudre a une influence sur sa capacité à être mise en suspension et à rester en suspension dans le fluide caloporteur en circulation. Dans le cadre de cette description, on entend par « granulométrie médiane » la granulométrie contrôlée sur un appareil laser Malvern de type Mastersizer 2000 dont la métrologie est conforme à la norme ISO 13320 (calibration par un matériau de référence certifié (CRM)).

Les résultats de ces essais sont notamment les suivants :
- Essai 1 (témoin) : La composition testée était uniquement de l'eau.

L'intensité absorbée était quasi-nulle.
- Essai 2 : La composition testée était un mélange d'eau (98 %) et de poudre de carbonate de calcium (2 %) d'une granulométrie médiane de 10 µm. L'intensité absorbée est de 40 % pour 3 cm de hauteur d'eau.
- Essai 3 : La composition testée était un mélange d'eau (95 %), de poudre de carbonate de calcium (2,5 %) d'une granulométrie médiane de 10 µm et d'antigel (2,5 %).

L'intensité absorbée est de 80 % pour 3 cm de hauteur d'eau.
- Essai 4 : La composition testée était un mélange d'eau (Entre 66,7 et 66,8 %), d'antigel (30 %), de poudre de carbonate de calcium (3 %) d'une granulométrie médiane de 2 µm et de tensioactif (entre 0,2 et 0,3 %). La présence du tensioactif permet de conserver la poudre en suspension plus longtemps.

Les inventeurs ont déduit de ces essais que la concentration de poudre de carbonate de calcium doit être comprise entre 1 % et 3 % et que la poudre doit présenter une granulométrie médiane comprise entre 0,8 et 10 µm. Par exemple, la poudre est de la poudre Durcal 1 ou Durcal 2 commercialisée par la société Omya SAS.

Une telle poudre est constituée de carbonate de calcium présentant une pureté élevée, par exemple supérieure à 98%, et une luminosité très forte.

Selon un mode de réalisation, la poudre présente une blancheur CIE, mesurée selon DIN 6174, telle que le paramètre L* est égal à une valeur entre 94 et 98, et/ou telle que le paramètre a* est égal à une valeur entre 0,1 et 1,5 , et/ou telle que le paramètre b* est égal à une valeur entre 0,5 et 4 et, de préférence, telle que le paramètre L* est égal à une valeur entre 94 et 98, le paramètre a* est égal à une valeur entre 0,1 et 1,5 , et le paramètre b* est égal à une valeur entre 0,5 et 4. La blancheur CIE L*, a*, b* mesurée selon DIN 6174 est d'une manière plus préférentielle sensiblement égale à 97,5/0,5/2,4.

La présence d'antigel permet d'empêcher le gel du fluide caloporteur en cas de température négative. Il s'agit par exemple de l'antigel commercialisé sous l'appellation Neutragard. La concentration d'antigel peut être comprise entre 0 et 40 %, par exemple 30 %.

Le tensioactif permet d'améliorer la capacité de la poudre à être mise en suspension et à rester en suspension dans le fluide caloporteur. La concentration de tensioactif peut être comprise entre 0 et 3 %, avantageusement entre 0,2 et 0,3 %.

Enfin, l'anti-moussant permet d'empêcher la formation de mousse, ce qui pourrait nuire au bon fonctionnement du capteur solaire. La concentration d'anti-moussant peut être comprise entre 0 et 3 %, avantageusement entre 0,2 et 0,3 %. L'anti-moussant est par exemple de l'Agitan 305 (marque déposée).

Un exemple de fluide spécifique selon un mode de réalisation de l'invention est :
- Eau, quantité pour faire 100 %
- Antigel Neutragard, 30 %
- Poudre Durcal 1, 3 %
- Tensio-actif, 0,2 à 0,3 %
- Anti-moussant Agitan 305, 0,2 à 0,3 %.
Ce fluide spécifique convient pour un capteur solaire domestique. En particulier, les différents composants ne présentent pas de risque sanitaire (en cas de fuite du fluide caloporteur dans le chauffe-eau), sont disponibles pour un coût peu élevé, ne présentent pas de risque d'endommagement pour l'installation et peuvent être rejetés ou recyclés sans difficulté. De plus, par rapport à l'eau, il présente une absorptivité supérieure, ce qui améliore le rendement du capteur solaire.

Le fluide spécifique peut aussi être utilisé dans toute autre application, par exemple domestique ou industrielle, dans laquelle un rayonnement lumineux doit être converti en chaleur. Il peut s'agir d'un rayon lumineux naturel ou artificiel, visible ou infrarouge.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

En particulier, l'invention n'est pas limitée à la poudre de carbonate de calcium mais est élargie à d'autres poudres minérales, naturelles ou synthétiques.

Lors de la fabrication du fluide spécifique, la poudre minérale peut être ajoutée sous forme de poudre sèche ou de suspension liquide.

## Revendications

1. Fluide spécifique convenant pour la conversion énergétique d'un rayonnement lumineux en chaleur, le fluide comprenant un liquide incluant de l'eau et une charge solide apte à être mise en suspension dans le liquide,
**caractérisé par le fait que** la charge solide comporte de la poudre de carbonate de calcium fortement diffusante pour le rayonnement solaire, la poudre de carbonate de calcium fortement diffusante présentant une concentration massique comprise entre 1 et 3 % et une granulométrie médiane comprise entre 0,8 et 10 µm, les particules de la poudre de carbonate de calcium fortement diffusante présentant en moyenne un coefficient de diffusion de l'énergie lumineuse supérieur à 0,7, le liquide n'étant pas une solution de polymère poly-électrolyte de polystyrène sulfonate de sodium ou d' hydrocarbure aromatique polycyclique pour la fabrication de micro capsules, le coefficient de diffusion de l'énergie lumineuse étant défini comme, lorsque une particule reçoit un flux lumineux incident, le rapport entre l'énergie du flux total diffusé et l'énergie du flux lumineux incident.

2. Fluide spécifique selon l'une des revendications précédentes, dans lequel la poudre de carbonate de calcium fortement diffusante présente une granulométrie médiane comprise entre 1 et 3 µm.

3. Fluide spécifique selon l'une des revendications précédentes, dans lequel la poudre de carbonate de calcium fortement diffusante est essentiellement constituée de particules sphéroïdales.

4. Fluide spécifique selon l'une des revendications précédentes, dans lequel la poudre de carbonate de calcium fortement diffusante présente une blancheur CIE, mesurée selon DIN 6174, telle que le paramètre L* est égal à une valeur entre 94 et 98, et/ou telle que le paramètre a* est égal à une valeur entre 0,1 et 1,5 , et/ou telle que le paramètre b* est égal à une valeur entre 0,5 et 4.

5. Fluide spécifique selon l'une des revendications précédentes, comprenant de l'antigel, la concentration massique d'antigel étant comprise entre 0 % exclu et 40 % inclus.

6. Fluide spécifique selon l'une des revendications précédentes, comportant un colorant liquide organique dans une concentration comprise entre 0.2 et 1% de telle sorte que le fluide spécifique présente une absorptivité de l'énergie comprise entre 0,1 et 10 cm⁻¹ pour le rayonnement solaire.

7. Fluide spécifique selon l'une des revendications précédentes, comprenant un tensioactif, la concentration massique de tensioactif étant comprise entre 0 % exclu et 3 % inclus.

8. Fluide spécifique selon l'une des revendications précédentes, comprenant un anti-moussant, la concentration massique d'anti-moussant étant comprise entre 0 % exclu et 3 % inclus.

9. Fluide spécifique selon l'une des revendications précédentes, dans lequel la concentration massique de poudre de carbonate de calcium est de 3 %, la concentration massique d'antigel est de 30 %, la concentration massique de tensioactif est comprise entre 0,2 et 0,3 % et la concentration massique d'anti-moussant est comprise entre 0,2 et 0,3 %.

10. Fluide spécifique selon l'une des revendications précédentes, comprenant en outre un produit bactéricide.

11. Utilisation d'un fluide spécifique selon l'une des revendications précédentes dans un dispositif de conversion d'un rayonnement lumineux en chaleur, dans laquelle un rayon lumineux est dirigé vers ledit fluide spécifique, le fluide spécifique étant le lieu d'une conversion énergétique.

12. Dispositif de conversion d'un rayonnement lumineux en chaleur, comportant un fluide spécifique disposé de manière à pouvoir recevoir un rayonnement lumineux pour être le lieu d'une conversion énergétique, **caractérisé par le fait que** le fluide spécifique est selon l'une des revendications 1 à 10.

13. Dispositif selon la revendication 12 comportant un capteur solaire.

## Patentansprüche

1. Spezifisches Fluid, das für die Energieumwandlung von einer Lichtstrahlung in Wärme geeignet ist, wobei das Fluid eine Flüssigkeit umfasst, die Wasser und eine Feststoffbeladung enthält, die geeignet ist, in der Flüssigkeit suspendiert zu werden,
**dadurch gekennzeichnet, dass** die Feststoffbeladung Calciumcarbonatpulver umfasst, das für die Sonnenstrahlung stark diffundierend ist, wobei das stark diffundierende Calciumcarbonatpulver eine Massenkonzentration, die zwischen 1 und 3 % liegt, und eine mittlere Granulometrie aufweist, die zwischen 0,8 und 10 µm liegt, wobei die Partikel des stark diffundierenden Calciumcarbonatpulvers im Durchschnitt einen Diffusionskoeffizienten der Lichtenergie aufweisen, der höher als 0,7 ist, wobei die Flüssigkeit keine Polyelektrolytpolymerlösung aus Natriumpolystyrolsulfonat oder aus polycyclischem aromatischen Kohlenwasserstoff für die Herstellung von Mikrokapseln ist, wobei der Diffusionskoeffizient der Lichtenergie, wenn ein Partikel einen einfallenden Lichtfluss empfängt, als das Verhältnis zwischen der Energie des diffundierten Gesamtflusses und der Energie des einfallenden Lichtflusses definiert wird.

2. Spezifisches Fluid nach einem der vorhergehenden Ansprüche, wobei das stark diffundierende Calciumcarbonatpulver eine mittlere Granulometrie aufweist, die zwischen 1 und 3 µm liegt.

3. Spezifisches Fluid nach einem der vorhergehenden Ansprüche, wobei das stark diffundierende Calciumcarbonatpulver im Wesentlichen aus sphäroidischen Partikeln gebildet ist.

4. Spezifisches Fluid nach einem der vorhergehenden Ansprüche, wobei das stark diffundierende Calciumcarbonatpulver einen derartigen Weißgrad CIE nach DIN 6174 gemessen aufweist, dass der Parameter L* gleich einem Wert zwischen 94 und 98 und/oder dass der Parameter a* gleich einem Wert zwischen 0,1 und 1,5 und/oder dass der Parameter b* gleich einem Wert zwischen 0,5 und 4 ist.

5. Spezifisches Fluid nach einem der vorhergehenden Ansprüche, ferner umfassend ein Frostschutzmittel, wobei die Massenkonzentration des Frostschutzmittels zwischen 0 % (ausschließlich) und 40 % (einschließlich) liegt.

6. Spezifisches Fluid nach einem der vorhergehenden Ansprüche, umfassend einen flüssigen organischen Farbstoff in einer Konzentration zwischen 0,2 und 1 %, derart, dass das spezifische Fluid ein Energieabsorptionsvermögen aufweist, das für die Sonnenstrahlung zwischen 0,1 und 10 cm⁻¹ liegt.

7. Spezifisches Fluid nach einem der vorhergehenden Ansprüche, ferner umfassend ein Tensid, wobei die Massenkonzentration des Tensids zwischen 0 % (ausschließlich) und 3 % (einschließlich) liegt.

8. Spezifisches Fluid nach einem der vorhergehenden Ansprüche, ferner umfassend einen Entschäumer, wobei die Massenkonzentration des Entschäumers zwischen 0 % (ausschließlich) und 3 % (einschließlich) liegt.

9. Spezifisches Fluid nach einem der vorhergehenden Ansprüche, wobei die Massenkonzentration des Calciumcarbonatpulvers 3 % beträgt, die Massenkonzentration des Frostschutzmittels 30 % beträgt, die Massenkonzentration des Tensids zwischen 0,2 und 0,3 % beträgt und die Massenkonzentration des Entschäumers zwischen 0,2 und 0,3 % beträgt.

10. Spezifisches Fluid nach einem der vorhergehenden Ansprüche, ferner umfassend ein bakterizides Produkt.

11. Verwendung eines spezifischen Fluids nach einem der vorhergehenden Ansprüche in einer Vorrichtung zur Umwandlung von einer Lichtstrahlung in Wärme, wobei ein Lichtstrahl zu dem spezifischen Fluid gelenkt wird, wobei das spezifische Fluid der Ort einer Energieumwandlung ist.

12. Vorrichtung zur Umwandlung von einer Lichtstrahlung in Wärme, umfassend ein spezifisches Fluid, das derart angeordnet ist, um eine Lichtstrahlung zu empfangen, um der Ort einer Energieumwandlung zu sein, **dadurch gekennzeichnet, dass** das spezifische Fluid nach einem der Ansprüche 1 bis 10 ist.

13. Vorrichtung nach Anspruch 12, umfassend einen Sonnensensor.

## Claims

1. Specific fluid suitable for converting light radiation to heat, the fluid comprising a liquid including water and a filler able to be in suspension in the liquid, **characterized in that** the filler comprises powder of calcium carbonate which strongly scatters solar radiation, the strongly scattering powder of calcium carbonate having a concentration by mass of between 1% and 3% and a median particle size of between 0.8 µm and 10 µm, the particles of the strongly scattering powder having, on average, a light energy scattering coefficient of greater than 0.7, the fluid being not a polyelectrolyte polymer solution of Sodium Polystyrenesulfonate or Polycyclic aromatic hydrocarbon for microcapsule preparation, the light energy scattering coefficient being defined as the ratio of the energy of a total flow scattered to the energy of the incident flow when a particle receives the incident energy flow.

2. Specific fluid according to claim 1, in which the strongly scattering powder of calcium carbonate has a median particle size of between 1 µm and 3 µm.

3. Specific fluid according to one of the preceding claims, in which the strongly scattering powder of calcium carbonate is essentially constituted of spheroidal particles.

4. Specific fluid according to one of the preceding claims, in which the strongly scattering powder of calcium carbonate has a CIE whiteness, measured according to DIN 6174, such that the parameter L* is equal to a value between 94 and 98, and/or such that the parameter a* is equal to a value between 0.1 and 1.5, and/or such that the parameter b* is equal to a value between 0.5 and 4.

5. Specific fluid according to one of the preceding claims, comprising antifreeze, the concentration by mass of antifreeze being between 0%, limit excluded, and 40%, limit included.

6. Specific fluid according to one of the preceding claims, comprising an organic liquid colorant in a concentration of between 0.2 and 1 % such that the fluid has an energy absorptivity of between 0.1 cm⁻¹ and 10 cm⁻¹ for solar radiation.

7. Specific fluid according to one of the preceding claims, comprising a surfactant, the concentration by mass of surfactant being between 0%, limit excluded, and 3%, limit included.

8. Specific fluid according to one of the preceding claims, comprising an antifoam, the concentration by mass of antifoam being between 0%, limit excluded, and 3%, limit included.

9. Specific fluid according to one of the preceding claims, in which the concentration by mass of powder of calcium carbonate is 3%, the concentration by mass of antifreeze is 30%, the concentration by mass of surfactant is between 0.2% and 0.3% and the concentration by mass of antifoam is between 0.2% and 0.3%.

10. Specific fluid according to one of the preceding claims, also comprising a bactericidal product.

11. Use of a specific fluid according to one of the preceding claims, in a device for converting light radiation to heat, in which a light ray is directed towards said specific fluid, the specific fluid being the site of an energy conversion.

12. Device for converting light radiation to heat, comprising a specific fluid arranged in such a way as to be able to receive light radiation so as to be the site of an energy conversion, **characterized in that** the specific fluid is according to any one of Claims 1 to 10.

13. Device according to Claim 12, comprising a solar collector.
